(19) **Europäisches Patentamt European Patent Office Office européen des brevets**

(11) **EP 3 274 977 B1**

(12) **FASCICULE DE BREVET EUROPEEN**

(45) Date de publication et mention de la délivrance du brevet:
**19.12.2018 Bulletin 2018/51**

(21) Numéro de dépôt: **16712813.1**

(22) Date de dépôt: **23.03.2016**

(51) Int Cl.:
***G08C 17/02*** *(2006.01)*

(86) Numéro de dépôt international:
**PCT/EP2016/056453**

(87) Numéro de publication internationale:
**WO 2016/156165 (06.10.2016 Gazette 2016/40)**

(54) **PROCÉDÉ ET SYSTÈME DE COMMANDE DE DISPOSITIFS DOMOTIQUES D'UNE HABITATION**

VERFAHREN UND SYSTEM ZUR STEUERUNG VON HEIMAUTOMATISIERUNGSVORRICHTUNGEN EINER BEHAUSUNG

METHOD AND SYSTEM FOR CONTROLLING HOME-AUTOMATION DEVICES OF A DWELLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2015 FR 1552610**

(43) Date de publication de la demande:
**31.01.2018 Bulletin 2018/05**

(73) Titulaire: **Delta Dore**
**35270 Bonnemain (FR)**

(72) Inventeurs:
• **MERCELAT, Joël**
**35270 Bonnemain (FR)**
• **DELAHAYE, Nathanaël**
**35270 Bonnemain (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 1 453 345   US-A1- 2014 167 931**

**Description**

La présente invention concerne un procédé, un dispositif et un système de commande de dispositifs domotiques d'une habitation.

La domotique prend une place de plus en plus prépondérante dans les habitations.

La commande des dispositifs domotiques devient pour un utilisateur de plus en plus complexe quand le nombre de dispositifs domotiques augmente.

L'utilisation d'une simple chaîne de caractères pour identifier un dispositif domotique parmi une pluralité de dispositifs domotiques dans une habitation, voire une pièce de l'habitation, devient aujourd'hui limitative.

Par exemple, une pièce comporte plusieurs ouvertures dont l'occultation est gérée par la domotique.

Nommer les dispositifs occultant d'une pièce, volet roulant, gauche droit n'est pas suffisant pour un utilisateur. En effet, la gauche et la droite sont fonction de la position de l'utilisateur dans la pièce.

Nommer des éclairages tels que des lampadaires dans une pièce pose aussi le même souci.

Ceci rend la commande de tels dispositifs domotiques peu intuitive et donc peu pratique à une utilisation.

La publication US2014/0167931 divulgue un dispositif de commande plus intuitif, mais présente encore des inconvénients.

La présente invention a pour but de résoudre les inconvénients de l'art antérieur en proposant un procédé, un dispositif et un système de commande de dispositifs domotiques d'une habitation qui soit intuitif et facile à utiliser pour tout utilisateur.

A cette fin, selon un premier aspect, l'invention propose un procédé de commande de dispositifs domotiques d'une habitation, caractérisé en ce que les dispositifs domotiques sont commandés par un dispositif de commande comportant un écran tactile et qui envoie chaque commande à une centrale qui redirige la commande vers le dispositif domotique commandé, la centrale étant reliée par liaison radio aux dispositifs domotiques, le procédé comportant les étapes de :

- détermination, par la centrale et par l'intermédiaire de la liaison radio, de la liste des dispositifs domotiques,
- association, par l'intermédiaire du dispositif de commande, de chaque dispositif domotique à une icône et à un identifiant alphanumérique,
- obtention par le dispositif de commande d'une image d'au moins une partie de l'habitation,
- visualisation par le dispositif de commande de l'image sur l'écran tactile,
- détection par le dispositif de commande d'une sélection d'une icône parmi une liste d'icônes,
- détection par le dispositif de commande d'un positionnement de l'icône dans l'image et mémorisation de la position de l'icône déterminée,
- détection par le dispositif de commande d'un appui sur l'image à la position de l'icône mémorisée,
- génération par le dispositif de commande d'une commande à la centrale et à destination du dispositif domotique auquel l'icône est associée ou visualisation d'une autre icône liée à l'icône dont la position est mémorisée si l'appui à la position de l'icône dans l'image est détecté.

L'invention concerne aussi un système de commande de dispositifs domotiques d'une habitation, caractérisé en ce que les dispositifs domotiques sont commandés par un dispositif de commande comportant un écran tactile et qui envoie chaque commande à une centrale qui redirige la commande vers le dispositif domotique commandé, la centrale étant reliée par liaison radio aux dispositifs domotiques, le système comportant :

- des moyens de détermination, compris dans la centrale et par l'intermédiaire de la liaison radio, de la liste des dispositifs domotiques,
- des moyens d'association, compris dans l'intermédiaire du dispositif de commande, de chaque dispositif domotique à une icône et à un identifiant alphanumérique,
- des moyens d'obtention compris dans le dispositif de commande d'une image d'au moins une partie de l'habitation,
- des moyens de visualisation compris dans le dispositif de commande de l'image sur l'écran tactile,
- des moyens de détection compris dans le dispositif de commande d'une sélection d'une icône parmi une liste d'icônes,
- des moyens de détection compris dans le dispositif de commande d'un positionnement de l'icône dans l'image et mémorisation de la position de l'icône déterminée,
- des moyens de détection compris dans le dispositif de commande d'un appui sur l'image à la position de l'icône mémorisée,
- des moyens de génération compris dans le dispositif de commande d'une commande à la centrale et à destination du dispositif domotique auquel l'icône est associée ou de visualisation d'une autre icône liée à l'icône dont la position est mémorisée si l'appui à la position de l'icône dans l'image est détecté.

Ainsi, la présente invention, en permettant le placement d'icônes sur une image d'une partie de l'habitation simplifie l'utilisation et la commande de dispositifs domotiques.

Selon un mode particulier de l'invention, le procédé comporte en outre les étapes de :

- obtention par le dispositif de commande d'une commande de modification de l'aspect visuel de l'icône positionnée dans l'image,
- modification par le dispositif de commande de l'aspect visuel de l'icône positionnée dans l'image.

Ainsi, si l'icône occupe une surface importante dans l'image par rapport à la vue du dispositif domotique dans l'image, la présente invention permet de préserver la vision du dispositif domotique si l'icône est à proximité de celui-ci.

Selon un mode particulier de l'invention, la modification de positionnement de l'icône consiste à rendre l'icône translucide ou réduire la taille de l'icône.

Ainsi, si l'icône occupe une surface importante dans l'image par rapport à la vue du dispositif domotique dans l'image, la présente invention permet de préserver la vision du dispositif domotique si l'icône est à proximité de celui-ci.

Selon un mode particulier de l'invention, d'autres images sont obtenues de l'habitation et le procédé comporte les étapes de :

- visualisation par le dispositif de commande d'images réduites des autres images obtenues,
- détection par le dispositif de commande d'une sélection d'une image réduite d'une autre image,
- visualisation de l'autre image correspondant à l'image réduite sélectionnée,
- détection par le dispositif de commande d'une sélection d'une icône parmi une liste d'icônes,
- détection par le dispositif de commande d'un positionnement de l'icône dans l'autre image et mémorisation de la position de l'icône déterminée,
- détection par le dispositif de commande d'un appui sur l'autre image à la position de l'icône mémorisée,
- génération par le dispositif de commande d'une commande à la centrale et à destination du dispositif domotique auquel l'icône est associée ou visualisation d'une autre icône liée à l'icône dont la position est mémorisée si l'appui à la position de l'icône dans l'image est détecté.

Ainsi, la présente invention permet de produire un affichage différent pour différentes pièces d'une habitation.

Selon un mode particulier de l'invention, les dispositifs domotiques sont des appareils électriques, des capteurs, des systèmes d'éclairage, des dispositifs occultant, un système de chauffage, une centrale d'alarme.

Selon un mode particulier de l'invention, l'autre icône liée à l'icône dont la position est mémorisée est une commande à au moins trois états possibles.

Ainsi, la commande est adaptée à certains dispositifs domotiques tels que des systèmes d'occultation d'ouvertures, des systèmes de chauffage.

Selon un mode particulier de l'invention, l'autre icône liée à l'icône dont la position est mémorisée consiste en une invitation à une saisie de mot de passe.

Ainsi, la présente invention est adaptée à la commande de dispositifs domotiques à accès contrôlé tels que par exemple des alarmes anti intrusions.

Selon un mode particulier de l'invention, le procédé comporte en outre une étape de débrayage des étapes de sélection d'une icône parmi une liste d'icônes, d'obtention par le dispositif de commande d'une image d'au moins une partie de l'habitation, de détection par le dispositif de commande d'une sélection d'une icône parmi une liste d'icônes et de détection par le dispositif de commande d'un positionnement de l'icône dans l'image et mémorisation de la position de l'icône déterminée.

Ainsi, il est possible d'empêcher des personnes, par exemple des enfants ou des visiteurs, de modifier la configuration du dispositif de commande.

L'invention concerne aussi les programmes d'ordinateur stockés sur un support d'informations, lesdits programmes comportant des instructions permettant de mettre en oeuvre les procédés précédemment décrits, lorsqu'ils sont chargés et exécutés par un système informatique.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente un exemple d'habitation dans laquelle la présente invention est implémentée ;
la Fig. 2 représente un dispositif de commande domotique selon la présente invention ;
la Fig. 3 représente une centrale domotique selon la présente invention ;
la Fig. 4 représente une vue de l'écran d'affichage du dispositif de commande domotique selon la présente invention ;
la Fig. 5 représente un exemple d'algorithme de programmation et de génération de commandes domotiques selon la présente invention ;

la Fig. 6 représente un exemple d'algorithme, exécuté par le dispositif de commande domotique pour la gestion des différentes orientations de l'affichage de commandes domotiques selon la présente invention ;

la Fig. 7 représente un exemple d'algorithme, exécuté par le dispositif de commande domotique pour la gestion de modifications de positionnement des icônes selon la présente invention ;

la Fig. 8 représente un exemple d'algorithme, exécuté par le dispositif de commande domotique, pour la commande de dispositifs domotiques selon la présente invention ;

la Fig. 9 représente un exemple d'icône utilisé par la présente invention pour l'établissement d'une consigne.

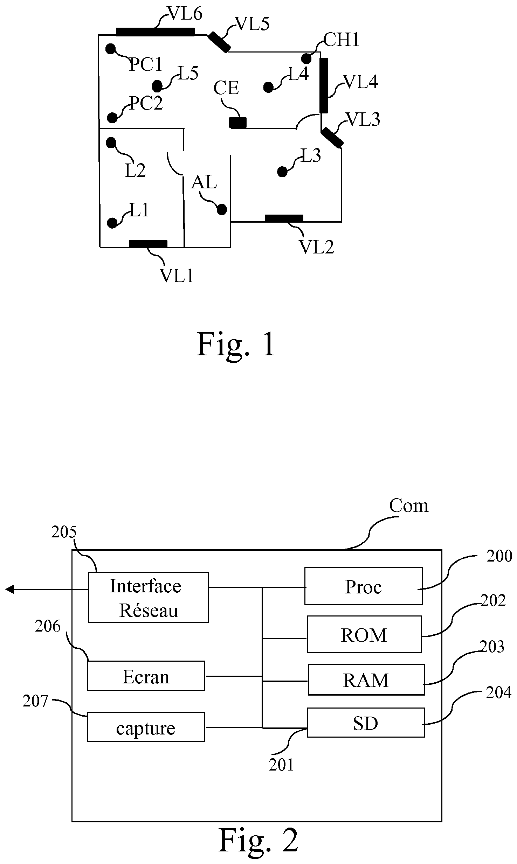

La **Fig. 1** représente un exemple d'habitation dans laquelle la présente invention est implémentée.

L'habitation comporte une pluralité de pièces, les pièces comportant des ouvertures équipées de systèmes d'occultation comme par exemple des volets roulants VL1 à VL6, de systèmes d'éclairage L1 à 5, de prises électriques commandées PC1 et PC2, d'un système anti intrusion AL et d'une commande de régulation de chauffage et/ou de climatisation PC.

L'habitation comporte aussi une centrale CE qui communique par liaison radio avec les dispositifs domotiques. La centrale identifie les dispositifs en effectuant une interrogation par l'intermédiaire du réseau radio la reliant aux dispositifs domotiques qui répondent à l'interrogation. La centrale CE forme ainsi une liste de dispositifs domotiques.

Selon la présente invention, un dispositif de commande Com permet de nommer et de choisir une icône pour chaque dispositif domotique de la liste formée. La liste enrichie de ces informations est mémorisée dans la centrale CE et/ou dans le dispositif de commande Com. Les icônes choisies sont sélectionnées parmi une liste d'icônes liée au type de dispositif domotique. Par exemple, différentes icônes sont proposées pour un dispositif domotique d'éclairage, d'autres icônes sont proposées pour un dispositif domotique d'occultation, d'autres icônes sont proposées pour un dispositif domotique de régulation de la température et d'autres icônes sont proposées pour un système anti intrusion.

Les systèmes d'occultation, d'éclairage, les prises électriques, des appareils électriques, des capteurs, le système anti intrusion sont des dispositifs domotiques commandés par la présente invention.

Bien entendu, la présente invention ne se limite pas aux exemples donnés en référence à la Fig. 1.

Selon la présente invention :

- la centrale CE détermine, par l'intermédiaire de la liaison radio, la liste des dispositifs domotiques,
- la centrale CE associe, par l'intermédiaire du dispositif de commande, chaque dispositif domotique à une icône et à un identifiant alphanumérique,
- le dispositif de commande Com obtient une image d'au moins une partie de l'habitation,
- le dispositif de commande Com visualise l'image sur l'écran tactile,
- le dispositif de commande Com détecte une sélection d'une icône parmi une liste d'icônes,
- le dispositif de commande Com détecte un positionnement de l'icône dans l'image et mémorise la position de l'icône déterminée,
- le dispositif de commande Com détecte un appui sur l'image à la position de l'icône mémorisée,
- le dispositif de commande Com génère une commande à la centrale et à destination du dispositif domotique auquel l'icône est associée ou visualise une autre icône liée à l'icône dont la position est mémorisée si l'appui à la position de l'icône dans l'image est détecté.

La **Fig. 2** représente un dispositif de commande domotique selon la présente invention.

Le dispositif de commande domotique Com comprend :

- un processeur, micro-processeur, ou microcontrôleur 200 ;
- une mémoire volatile 203 ;
- une mémoire non volatile 202 ;
- éventuellement, un lecteur 204 de médium de stockage, tel qu'un lecteur de carte SD (*Secure Digital Card* en anglais ou *Carte Numérique Sécurisée* en français) ou un disque dur pour mémoriser les documents traités par la présente invention ;
- une interface 205 réseau sans fil,
- un écran 206,
- une interface 207 de capture de commandes effectuées par l'utilisateur du dispositif de commande domotique Com,
- un bus de communication 201 reliant le processeur 200 à la mémoire ROM 203, à la mémoire RAM 203, au lecteur de médium de stockage 204, à l'interface 205 réseau sans fils, à l'écran 206 et à l'interface de capture de commandes 207.

Le dispositif de commande domotique Com est préférentiellement intégré dans un téléphone intelligent, une tablette.

L'interface de capture de commande est par exemple intégrée dans l'écran 206 formant ainsi un écran tactile.

L'interface réseau sans fil comporte par exemple une interface WIFI, une interface réseau cellulaire, une interface de type Bluetooth.

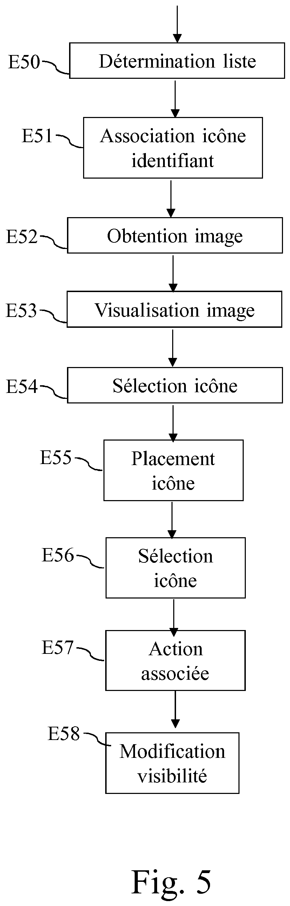

Le processeur 200 est capable d'exécuter des instructions chargées dans la mémoire volatile 203 à partir de la mémoire non volatile 202, d'une mémoire externe (non représentée), d'un support de stockage, tel qu'une carte SD ou autre, ou d'un réseau de communication. Lorsque le dispositif de commande domotique Com est mis sous tension, le processeur 200 est capable de lire de la mémoire volatile 203 des instructions et de les exécuter. Ces instructions forment des programmes d'ordinateur qui causent la mise en oeuvre, par le processeur 200, de tout ou partie des procédés décrits en relation avec les Figs. 5, 6, 7 et 8.

Tout ou partie des procédés décrits en relation avec les Figs. 5, 6, 7 et 8 peuvent être implémentés sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

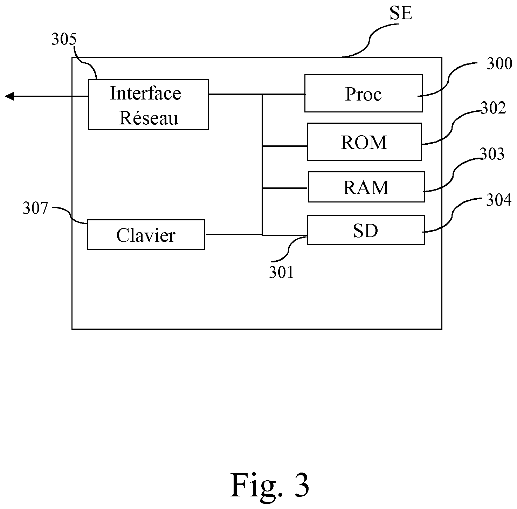

La **Fig. 3** représente une centrale domotique selon la présente invention.

La centrale domotique CE comprend :

- un processeur, micro-processeur, ou microcontrôleur 300 ;
- une mémoire volatile 303 ;
- une mémoire non volatile 302 ;
- éventuellement, un lecteur 304 de medium de stockage, tel qu'un lecteur de carte SD (*Secure Digital Card* en anglais ou *Carte Numérique Sécurisée* en français) ou un disque dur pour mémoriser les documents traités par la présente invention ;
- une interface réseau 305,
- éventuellement un clavier 307,
- un bus de communication 301 reliant le processeur 300 à la mémoire ROM 303, à la mémoire RAM 303, au lecteur de médium de stockage 304, à l'interface réseau 305 et au clavier 307.

L'interface réseau 305 comporte une liaison vers internet, par exemple Ethernet, Wifi ou une interface réseau cellulaire.

Le processeur 300 est capable d'exécuter des instructions chargées dans la mémoire volatile 303 à partir de la mémoire non volatile 302, d'une mémoire externe (non représentée), d'un support de stockage, tel qu'une carte SD ou autre, ou d'un réseau de communication. Lorsque la centrale CE est mise sous tension, le processeur 300 est capable de lire de la mémoire volatile 303 des instructions et de les exécuter. Ces instructions forment des programmes d'ordinateur qui causent la mise en oeuvre, par le processeur 300, d'une partie du procédé décrit en relation avec la Fig. 5.

Le procédé décrit en relation avec la Fig. 5 peut être implémenté sous forme logicielle par exécution d'un ensemble d'instructions par une machine programmable, telle qu'un DSP (*Digital Signal Processor* en anglais ou *Unité de Traitement de Signal Numérique* en français) ou un microcontrôleur ou être implémenté sous forme matérielle par une machine ou un composant dédié, tel qu'un FPGA (*Field-Programmable Gate Array* en anglais ou *Matrice de Portes Programmable sur le Terrain* en français) ou un ASIC (*Application-Specific Integrated Circuit* en anglais ou *Circuit Intégré Spécifique à une Application* en français).

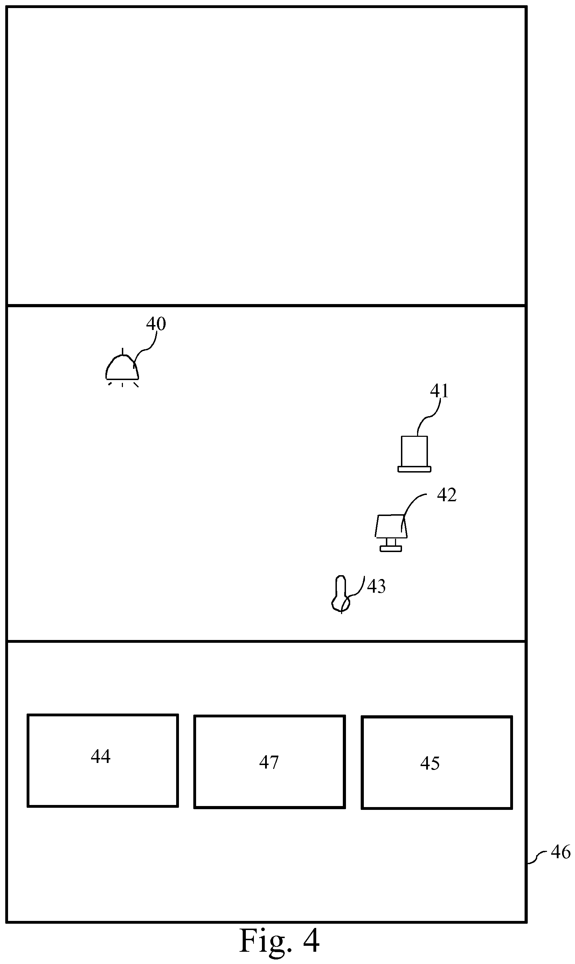

La **Fig. 4** représente une vue de l'écran d'affichage du dispositif de commande domotique selon la présente invention.

Dans l'écran d'affichage donné en exemple dans la Fig. 4, quatre icônes 40 à 43 sont représentées sur un fond d'écran composé d'une photo de la pièce dans laquelle se trouvent les différents dispositifs contrôlables par le dispositif de commande domotique Com selon la présente invention. L'icône notée 40 représente un luminaire qui peut être commandé selon la présente invention. L'icône 41 représente un volet roulant qui peut être commandé selon la présente invention. L'icône 42 représente un lampadaire branché sur une prise électrique qui peut être commandée selon la présente invention et l'icône 43 représente un système de chauffage et/ou de climatisation qui peut être commandé selon la présente invention.

Les icônes sont placées dans l'image à proximité des dispositifs commandés de manière à ce que l'utilisateur puisse reconnaître visuellement et sans équivoque quelle icône correspond au dispositif qu'il souhaite commander.

Selon la présente invention, l'utilisateur du dispositif de commande domotique Com peut modifier la position de l'icône à son gré.

Dans la Fig. 4, les icônes sont visibles. Selon la présente invention, les icônes peuvent être translucides de manière à éviter toute surcharge visuelle dans l'image. L'utilisateur du dispositif de commande domotique Com modifie par l'intermédiaire d'une commande prédéterminée la visibilité de tout ou partie des icônes insérées dans l'image. L'utilisateur du dispositif de commande domotique Com modifie aussi à son gré, par l'intermédiaire d'une commande prédéterminée, la taille de tout ou partie des icônes insérées dans l'image.

Dans la Fig. 4, trois images réduites sont représentées. Chaque image réduite 44, 45 et 47 est une vue d'une pièce de l'habitation. Lorsque l'utilisateur sélectionne une image réduite, celle-ci apparaît en fond d'écran ainsi que les différentes icônes insérées selon la présente invention.

Il est à remarquer ici que les images représentées en Fig. 4 sont des vues de différentes pièces, en variante, une ou plusieurs images sont des vues d'une partie ou de plusieurs plans de l'habitation.

La **Fig. 5** représente un exemple d'algorithme, exécuté par le dispositif de commande domotique de la programmation de commandes domotiques selon la présente invention.

Plus précisément, l'étape E50 est exécutée par le processeur 300 de la centrale CE et les étapes E51 à E58 sont exécutées par le processeur 300 du dispositif de commande domotique Com.

Le présent algorithme est effectué lorsque l'utilisateur du dispositif de commande domotique Com configure le dispositif de commande domotique Com pour commander les différents appareils domotiques présents dans son habitation. Le dispositif de commande domotique Com est préférentiellement une tablette tactile ou un téléphone intelligent sur lequel est installée une application permettant la mise en oeuvre de la présente invention.

A l'étape E50, le processeur 300 commande l'interface réseau 305 pour l'envoi sur la liaison radio d'un message d'interrogation. Les dispositifs domotiques répondent à l'interrogation et le processeur 300 forme ainsi une liste de dispositifs domotiques.

A l'étape E51, le processeur 200 commande le transfert par la liaison radio d'une requête pour obtenir la liste formée. A partir de cette liste, l'utilisateur du dispositif de commande Com nomme et choisit une icône pour chaque dispositif domotique de la liste formée. La liste enrichie de ces informations est mémorisée dans la centrale CE et/ou les noms et icônes sont mémorisés dans le dispositif domotique.

A l'étape E52, le processeur 200 détecte l'appui, par l'utilisateur du dispositif de commande domotique Com sur une image réduite notée 36 en Fig. 3 qui configure le dispositif de commande domotique Com pour la prise d'une photo.

L'utilisateur du dispositif de commande domotique Comprend par exemple une photo de chaque pièce de l'habitation ou une ou plusieurs photos d'une partie ou de la totalité d'un plan de l'habitation qui comporte des dispositifs domotiques à commander.

Chaque photo est mémorisée dans la mémoire du dispositif de commande domotique Com.

A l'étape E53, le processeur 200 commande la visualisation d'une image sur l'écran tactile.

A l'étape E54, le processeur 200 détecte la sélection d'une icône parmi la liste d'icônes.

A l'étape E55, le processeur 200 détecte un positionnement de l'icône dans l'image et mémorise la position de l'icône déterminée.

A l'étape E56, le processeur 200 détecte un appui sur l'image affichée sur l'écran tactile à la position de l'icône mémorisée.

A l'étape E57, le processeur 200 génère une commande à la centrale et à destination du dispositif domotique auquel l'icône est associée ou visualise une autre icône liée à l'icône dont la position est mémorisée si l'appui à la position de l'icône dans l'image est détecté.

A l'étape suivante E58, le processeur 200 modifie la visibilité de l'icône placé. L'icône est par exemple visible de manière translucide. En variante, la taille de l'icône est modifiée.

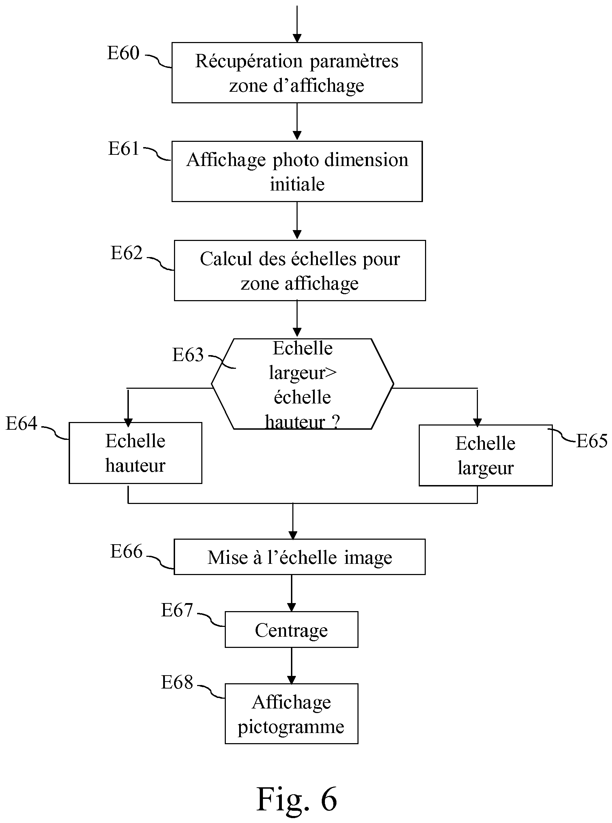

La **Fig. 6** représente un exemple d'algorithme, exécuté par le dispositif de commande domotique de la gestion des différentes orientations de l'affichage de commandes domotiques selon la présente invention.

Plus précisément, le présent algorithme est exécuté par le processeur 200 du dispositif de commande domotique Com.

Le présent algorithme est effectué à chaque modification de l'orientation du dispositif de commande domotique Com. A chaque modification de l'orientation du dispositif de commande domotique Com, les informations affichées sur l'écran 206 passent du mode portrait au mode paysage et réciproquement.

A l'étape E60, le processeur 200 obtient les paramètres de la zone d'affichage de l'écran 206. Les paramètres de la zone d'affichage sont les dimensions et la position dans l'écran de la zone disponible pour l'affichage de la vue telle que représentée en Fig. 4 ainsi que l'orientation de la vue dans l'écran.

Les dimensions sont notées *tailleécran(largeur), tailleécran(hauteur)* et la position dont les coordonnées sont notées *positionécran(x) et positionécran(y)*.

A l'étape E61, le processeur 200 commande l'affichage de la vue telle que représentée en Fig. 4 selon ses dimensions initiales. Par exemple, les dimensions initiales correspondent à l'orientation de celle-ci lors de la prise de la photo par l'utilisateur à l'étape E52 de la Fig. 5. Le processeur 200 obtient à cette même étape les dimensions de la photo. Les dimensions initiales sont notées *taillephoto(largeur), taillephoto(hauteur)*.

A l'étape suivante E62, le processeur 200 calcule les échelles en largeur *échellelarg* et hauteur *échellehaut* de la photo pour l'adaptation de celle-ci à la zone d'affichage.

Pour cela, le processeur 200 utilise les formules suivantes :

$$Echellelarg = tailleécran(largeur) / taillephoto(largeur)$$

$$Echellehaut = tailleécran(hauteur) / taillephoto(hauteur)$$

A l'étape suivante E63, le processeur 200 compare les échelles largeur *échellelarg* et hauteur *échellehaut*.

Si *échellelarg* est supérieure à *échellehaut,* le processeur 200 passe à l'étape E64. Dans la négative, le processeur 200 passe à l'étape E65.

A l'étape E64, le processeur 200 détermine un facteur d'échelle noté *échel* qui est égal à *échellehaut.*

Cette opération effectuée, le processeur 200 passe à l'étape E66.

A l'étape E65, le processeur 200 détermine le facteur d'échelle *échel* comme égal à *échellelarg.*

Cette opération effectuée, le processeur 200 passe à l'étape E66.

A l'étape E66, le processeur 200 modifie la taille de la vue telle que représentée en Fig. 3 à l'aide du facteur d'échelle *échel.*

A l'étape suivante E67, le processeur 200 positionne la vue telle que représentée en Fig. 4 au centre de l'écran 206. La position de la vue a les coordonnées suivantes *photo(x)* et *photo(y).*

La vue est positionnée à partir des formules suivantes :

$$photo(x) = positionécran(x) + tailleécran(largeur)/2$$

$$photo(x) = positionécran(y).+ tailleécran(hauteur)/2.$$

A l'étape suivante E68, le processeur 200 commande l'affichage des icônes aux positions correspondant dans l'image redimensionnée.

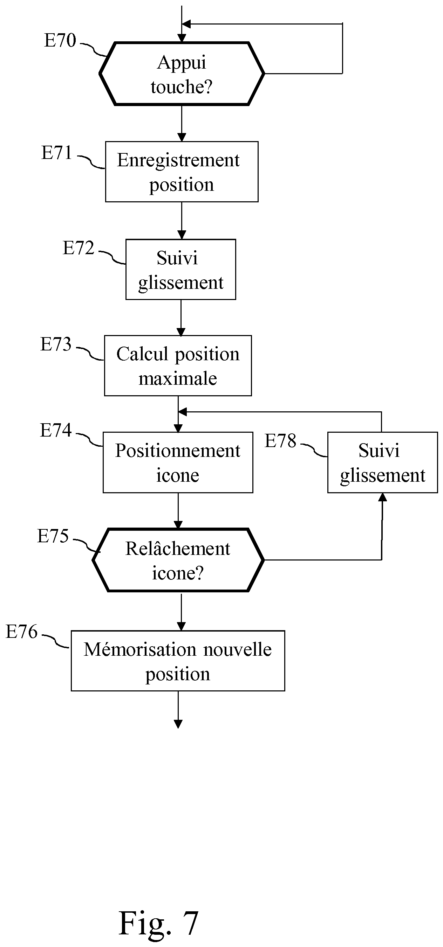

La **Fig. 7** représente un exemple d'algorithme, exécuté par le dispositif de commande domotique pour la gestion de modifications de positionnement des icônes selon la présente invention.

Plus précisément, le présent algorithme est exécuté par le processeur 200 du dispositif de commande domotique Com.

A l'étape E70, le processeur 200 vérifie si un appui sur une icône insérée selon la présente invention est effectué. Dans l'affirmative, le processeur passe à l'étape E71, dans la négative, le processeur 200 retourne à l'étape E70.

A l'étape suivante E71, le processeur 200 enregistre les coordonnées de l'icône sur l'écran. Les coordonnées de l'icône sont notées *positioncour(x)* et *positioncour(y).*

A l'étape suivante E72, le processeur 200 obtient de l'écran 206, des informations représentatives du déplacement de l'icône que souhaite effectuer l'utilisateur du dispositif de commande domotique Com. L'utilisateur du dispositif de commande domotique Com, en déplaçant son doigt sur l'écran, indique la position qu'il souhaite faire prendre à l'icône.

A l'étape suivante E73, le processeur 200 détermine les positions extrêmes que l'icône peut prendre dans la vue de la Fig. 3.

A l'étape suivante E74, le processeur 200 commande le positionnement de l'icône à la dernière position souhaitée par l'utilisateur du dispositif de commande domotique Com si celle-ci est comprise dans les positions extrêmes déterminées. Si celle-ci n'est pas comprise dans les positions extrêmes déterminées, le processeur 200 commande le positionnement de l'icône à la position maximale la plus proche de la dernière position souhaitée par l'utilisateur.

A l'étape suivante E75, le processeur 200 vérifie si l'utilisateur du dispositif de commande domotique Com a interrompu le déplacement de l'icône. Pour cela, le processeur 200 obtient de l'écran 206, des informations représentatives d'une interruption de l'appui du doigt de l'utilisateur du dispositif de commande domotique Com sur l'écran 206.

Dans l'affirmative, le processeur 200 passe à l'étape E76.

Dans la négative, le processeur 200 passe à l'étape E78.

A l'étape E78, le processeur 200 obtient de l'écran 206, des informations représentatives du déplacement de l'icône que souhaite effectuer l'utilisateur du dispositif de commande domotique Com et retourne à l'étape E74.

A l'étape E76, le processeur 200 mémorise la position de l'icône à la dernière position souhaitée par l'utilisateur du dispositif de commande domotique Com si celle-ci est comprise dans les positions extrêmes déterminées. Si celle-ci n'est pas comprise dans les positions extrêmes déterminées, le processeur 200 mémorise la position maximale la plus proche de la dernière position souhaitée par l'utilisateur.

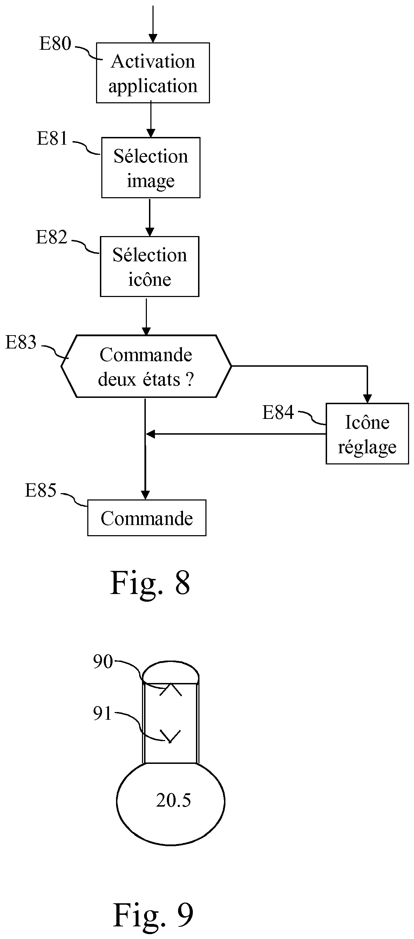

La **Fig. 8** représente un exemple d'algorithme, exécuté par le dispositif de commande domotique, pour la commande de dispositifs domotiques selon la présente invention.

Plus précisément, le présent algorithme est exécuté par le processeur 200 du dispositif de commande domotique Com.

A l'étape E80, le processeur 200 détecte l'activation de l'application de domotique par l'utilisateur du dispositif de commande domotique Com. Lors de l'activation de l'application, le processeur 200 commande l'affichage sur l'écran 206 d'une vue comme représentée dans la Fig. 3.

A l'étape suivante E81, le processeur 200 détecte la sélection d'une image réduite par l'utilisateur du dispositif de commande domotique Com.

A l'étape suivante E82, le processeur 200 détecte la sélection d'une icône par l'utilisateur du dispositif de commande domotique Com.

A l'étape suivante E83, le processeur 200 vérifie si l'icône sélectionnée correspond à une commande à deux états ou une commande à plus de deux états. Une commande à deux états correspond à une commande de marche/arrêt. Une commande à plus de deux états correspond par exemple à l'établissement d'une consigne de chauffage ou d'une ouverture partielle d'un dispositif d'occultation ou une variation d'intensité lumineuse d'un dispositif d'éclairage.

Si l'icône sélectionnée correspond à une commande à deux états, le processeur 200 passe à l'étape E85. Dans la négative, le processeur 200 passe à l'étape E84.

A l'étape E84, le processeur 200 commande l'affichage d'une icône pour l'établissement de consignes. Un exemple d'icône pour l'établissement d'une consigne est donné en référence à la Fig. 9.

Cette opération effectuée, le processeur 200 passe à l'étape E85.

A l'étape E85, le processeur 200 commande l'interface radio pour l'établissement d'une communication avec la centrale CE placée dans l'habitation. La centrale transfère la commande au dispositif domotique associé à l'icône sélectionnée et reçoit en retour une confirmation de l'exécution de la commande. A réception de la commande, la centrale CE transfère un message de confirmation de l'exécution de la commande au dispositif de commande. Le processeur 200 modifie alors l'aspect visuel de l'icône.

La **Fig. 9** représente un exemple d'icône utilisé par la présente invention pour l'établissement d'une consigne.

La Fig. 9 représente un exemple d'icône utilisé par la présente invention pour l'établissement d'une consigne d'un système de chauffage et/ou de climatisation.

Les flèches notées 90 et 91 permettent à l'utilisateur du dispositif de commande domotique d'augmenter ou de baisser une température de consigne qui, dans l'exemple de la Fig. 9, est de 20,5 degrés.

Bien entendu, la présente invention n'est nullement limitée aux modes de réalisation décrits ici, mais englobe, bien au contraire, toute variante à la portée de l'homme du métier, dans la limite de l'étendue définie par les revendications déposées.

**Revendications**

**1.** Procédé de commande de dispositifs domotiques d'une habitation, **caractérisé en ce que** les dispositifs domotiques sont commandés par un dispositif de commande comportant un écran tactile et qui envoie chaque commande à une centrale qui redirige la commande vers le dispositif domotique commandé, la centrale étant reliée par liaison radio aux dispositifs domotiques, le procédé comportant les étapes de :

- détermination (E50), par la centrale et par l'intermédiaire de la liaison radio, de la liste des dispositifs domotiques,
- association (E51), par l'intermédiaire du dispositif de commande, de chaque dispositif domotique à une icône et à un identifiant alphanumérique,
- obtention (E52) par le dispositif de commande d'une image d'au moins une partie de l'habitation,
- visualisation (E53) par le dispositif de commande de l'image sur l'écran tactile,
- détection (E54) par le dispositif de commande d'une sélection d'une icône parmi une liste d'icônes,
- détection (E55) par le dispositif de commande d'un positionnement de l'icône dans l'image et mémorisation de la position de l'icône déterminée,
- détection (E56) par le dispositif de commande d'un appui sur l'image à la position de l'icône mémorisée,
- génération (E57) par le dispositif de commande d'une commande à la centrale et à destination du dispositif domotique auquel l'icône est associée ou visualisation d'une autre icône liée à l'icône dont la position est mémorisée si l'appui à la position de l'icône dans l'image est détecté.

**2.** Procédé selon la revendication 1, **caractérisé en ce que** le procédé comporte en outre les étapes de :

- obtention par le dispositif de commande d'une commande de modification de l'aspect visuel de l'icône positionnée dans l'image,
- modification par le dispositif de commande de l'aspect visuel de l'icône positionnée dans l'image.

3. Procédé selon la revendication 2, **caractérisé en ce que** la modification de positionnement de l'icône consiste à rendre l'icône translucide ou réduire la taille de l'icône.

4. Procédé selon l'une quelconque des revendications précédentes, **caractérisé en ce que** d'autres images sont obtenues de l'habitation et **en ce que** le procédé comporte les étapes de :

- visualisation par le dispositif de commande d'images réduites des autres images obtenues,
- détection par le dispositif de commande d'une sélection d'une image réduite d'une autre image,
- visualisation de l'autre image correspondant à l'image réduite sélectionnée,
- détection par le dispositif de commande d'une sélection d'une icône parmi une liste d'icônes,
- détection par le dispositif de commande d'un positionnement de l'icône dans l'autre image et mémorisation de la position de l'icône déterminée,
- détection par le dispositif de commande d'un appui sur l'autre image à la position de l'icône mémorisée,
- génération par le dispositif de commande d'une commande à la centrale et à destination du dispositif domotique auquel l'icône est associée ou visualisation d'une autre icône liée à l'icône dont la position est mémorisée si l'appui à la position de l'icône dans l'image est détecté.

5. Procédé selon l'une quelconque des revendications précédentes, **caractérisé en ce que** les dispositifs domotiques sont des appareils électriques, des capteurs, des systèmes d'éclairage, des dispositifs occultants, un système de chauffage, une centrale d'alarme.

6. Procédé selon la revendication 5, **caractérisé en ce que** l'autre icône liée à l'icône dont la position est mémorisée est une commande à au moins trois états possibles.

7. Procédé selon la revendication 5, **caractérisé en ce que** l'autre icône liée à l'icône dont la position est mémorisée consiste en une invitation à une saisie de mot de passe.

8. Procédé selon l'une quelconque des revendications précédentes, **caractérisé en ce que** le procédé comporte en outre une étape de débrayage des étapes de sélection d'une icône parmi une liste d'icônes, d'obtention par le dispositif de commande d'une image d'au moins une partie de l'habitation, de détection par le dispositif de commande d'une sélection d'une icône parmi une liste d'icônes et de détection par le dispositif de commande d'un positionnement de l'icône dans l'image et mémorisation de la position de l'icône déterminée.

9. Système de commande de dispositifs domotiques d'une habitation, **caractérisé en ce que** les dispositifs domotiques sont commandés par un dispositif de commande comportant un écran tactile et qui envoie chaque commande à une centrale qui redirige la commande vers le dispositif domotique commandé, la centrale étant reliée par liaison radio aux dispositifs domotiques, le système comportant :

- des moyens de détermination, compris dans la centrale et par l'intermédiaire de la liaison radio, de la liste des dispositifs domotiques,
- des moyens d'association, compris dans l'intermédiaire du dispositif de commande, de chaque dispositif domotique à une icône et à un identifiant alphanumérique,
- des moyens d'obtention compris dans le dispositif de commande d'une image d'au moins une partie de l'habitation,
- des moyens de visualisation compris dans le dispositif de commande de l'image sur l'écran tactile,
- des moyens de détection compris dans le dispositif de commande d'une sélection d'une icône parmi une liste d'icônes,
- des moyens de détection compris dans le dispositif de commande d'un positionnement de l'icône dans l'image et mémorisation de la position de l'icône déterminée,
- des moyens de détection compris dans le dispositif de commande d'un appui sur l'image à la position de l'icône mémorisée,
- des moyens de génération compris dans le dispositif de commande d'une commande à la centrale et à destination du dispositif domotique auquel l'icône est associée ou visualisation d'une autre icône liée à l'icône dont la position est mémorisée si l'appui à la position de l'icône dans l'image est détecté.

**10.** Programme d'ordinateur stocké sur un support d'informations, ledit programme comportant des instructions permettant de mettre en oeuvre le procédé de création selon l'une quelconque des revendications 1 à 8, lorsqu'il est chargé et exécuté par un système informatique.

**Patentansprüche**

**1.** Verfahren zur Steuerung von Heimautomatisierungsvorrichtungen einer Behausung, **dadurch gekennzeichnet, dass** die Heimautomatisierungsvorrichtungen durch eine Steuerungsvorrichtung gesteuert werden, die einen Berührungsbildschirm aufweist und die jeden Befehl an eine Zentrale sendet, die den Befehl hin zu der gesteuerten Heimautomatisierungsvorrichtung weiterleitet, wobei die Zentrale per Funkverbindung mit den Heimautomatisierungsvorrichtungen verbunden ist, wobei das Verfahren die folgenden Schritte umfasst:

- Ermitteln, (E50), durch die Zentrale und mithilfe der Funkverbindung, der Liste der Heimautomatisierungsvorrichtungen,
- Verknüpfen (E51), mithilfe der Steuerungsvorrichtung, jeder Heimautomatisierungsvorrichtung mit einem Symbol und mit einer alphanumerischen Kennung,
- Erhalten (E52), durch die Steuerungsvorrichtung, eines Bilds zumindest eines Bereichs der Behausung,
- Darstellen (E53), durch die Steuerungsvorrichtung, des Bilds auf dem Berührungsbildschirm,
- Erkennen (E54), durch die Steuerungsvorrichtung, einer Auswahl eines Symbols aus einer Liste von Symbolen,
- Erkennen (E55), durch die Steuerungsvorrichtung, einer Positionierung des Symbols in dem Bild und Speichern der Position des ermittelten Symbols,
- Erkennen (E56), durch die Steuerungsvorrichtung, eines Drückens auf das Bild an der Position des gespeicherten Symbols,
- Erzeugen (E57), durch die Steuerungsvorrichtung, eines Befehls an die Zentrale und der für die Heimautomatisierungsvorrichtung bestimmt ist, mit der das Symbol verknüpft ist, oder Darstellen eines anderen Symbols, das mit dem Symbol verbunden ist, dessen Position gespeichert wird, wenn das Drücken an der Position des Symbols in dem Bild erkannt wird.

**2.** Verfahren nach Anspruch 1, **dadurch gekennzeichnet, dass** das Verfahren ferner die folgenden Schritte umfasst:

- Erhalten, durch die Steuerungsvorrichtung, eines Befehls zur Änderung des Erscheinungsbilds des Symbols, das in dem Bild positioniert ist,
- Ändern, durch die Steuerungsvorrichtung, des Erscheinungsbilds des Symbols, das in dem Bild positioniert ist.

**3.** Verfahren nach Anspruch 2, **dadurch gekennzeichnet, dass** die Positionierungsänderung des Symbols darin besteht, das Symbol durchscheinend zu machen oder die Größe des Symbols zu ändern.

**4.** Verfahren nach einem der vorhergehenden Ansprüche, **dadurch gekennzeichnet, dass** andere Bilder von der Behausung erhalten werden, und dadurch, dass das Verfahren die folgenden Schritte umfasst:

- Darstellung, durch die Steuerungsvorrichtung, von reduzierten Bildern der erhaltenen anderen Bilder,
- Erkennen, durch die Steuerungsvorrichtung, einer Auswahl eines reduzierten Bilds eines anderen Bilds,
- Darstellen des anderen Bilds, das dem ausgewählten reduzierten Bild entspricht,
- Erkennen, durch die Steuerungsvorrichtung, einer Auswahl eines Symbols aus einer Liste von Symbolen,
- Erkennen, durch die Steuerungsvorrichtung, einer Positionierung des Symbols in dem anderen Bild und Speichern der Position des ermittelten Symbols,
- Erkennen, durch die Steuerungsvorrichtung, eines Drückens auf das andere Bild an der Position des gespeicherten Symbols,
- Erzeugen, durch die Steuerungsvorrichtung, eines Befehls an die Zentrale und der für die Heimautomatisierungsvorrichtung bestimmt ist, mit der das Symbol verknüpft ist, oder Darstellen eines anderen Symbols, das mit dem Symbol verbunden ist, dessen Position gespeichert wird, wenn das Drücken an der Position des Symbols in dem Bild erkannt wird.

**5.** Verfahren nach einem der vorhergehenden Ansprüche, **dadurch gekennzeichnet, dass** die Heimautomatisierungsvorrichtungen elektrische Vorrichtungen, Sensoren, Beleuchtungssysteme, Verdeckungsvorrichtungen, ein Heizungssystem, eine Alarmzentrale sind.

**6.** Verfahren nach Anspruch 5, **dadurch gekennzeichnet, dass** das andere Symbol, das mit dem Symbol verbunden ist, dessen Position gespeichert ist, ein Befehl mit mindestens drei möglichen Zuständen ist.

**7.** Verfahren nach Anspruch 5, **dadurch gekennzeichnet, dass** das andere Symbol, das mit dem Symbol verbunden ist, dessen Position gespeichert ist, aus einer Aufforderung zu einer Passworteingabe besteht.

**8.** Verfahren nach einem der vorhergehenden Ansprüche, **dadurch gekennzeichnet, dass** das Verfahren ferner einen Schritt des Entkoppelns der Schritte Auswahl eines Symbols aus einer Liste von Symbolen, Erhalten, durch die Steuerungsvorrichtung, eines Bilds zumindest eines Bereichs der Behausung, Erkennen, durch die Steuerungsvorrichtung, einer Auswahl eines Symbols aus einer Liste von Symbolen und Erkennen, durch die Steuerungsvorrichtung, einer Positionierung des Symbols in dem Bild und Speichern der Position des ermittelten Symbols umfasst.

**9.** System zur Steuerung von Heimautomatisierungsvorrichtungen einer Behausung, **dadurch gekennzeichnet, dass** die Heimautomatisierungsvorrichtungen durch eine Steuerungsvorrichtung gesteuert werden, die einen Berührungsbildschirm aufweist und die jeden Befehl an eine Zentrale sendet, die den Befehl hin zu der gesteuerten Heimautomatisierungsvorrichtung weiterleitet, wobei die Zentrale per Funkverbindung mit den Heimautomatisierungsvorrichtungen verbunden ist, das System umfassend:

- Mittel zum Ermitteln, die in der Zentrale enthalten sind, und mithilfe der Funkverbindung, der Liste der Heimautomatisierungsvorrichtungen,
- Mittel zum Verknüpfen, die im Zwischenglied der Steuerungsvorrichtung enthalten sind, jeder Heimautomatisierungsvorrichtung mit einem Symbol und mit einer alphanumerischen Kennung,
- Mittel zur Erhalten, die in der Steuerungsvorrichtung enthalten sind, eines Bilds zumindest eines Bereichs der Behausung,
- Mittel zum Darstellen, die in der Steuerungsvorrichtung enthalten sind, des Bilds auf dem Berührungsbildschirm,
- Mittel zum Erkennen, die in der Steuerungsvorrichtung enthalten sind, einer Auswahl eines Symbols aus einer Liste von Symbolen,
- Mittel zum Erkennen, die in der Steuerungsvorrichtung enthalten sind, einer Positionierung des Symbols in dem Bild und Speichern der Position des ermittelten Symbols,
- Mittel zum Erkennen, die in der Steuerungsvorrichtung enthalten sind, eines Drückens auf das Bild an der Position des gespeicherten Symbols,
- Mittel zur Erzeugen, die in der Steuerungsvorrichtung enthalten sind, eines Befehls an die Zentrale und der für die Heimautomatisierungsvorrichtung bestimmt ist, mit der das Symbol verknüpft ist, oder Darstellen eines anderen Symbols, das mit dem Symbol verbunden ist, dessen Position gespeichert wird, wenn das Drücken an der Position des Symbols in dem Bild erkannt wird.

**10.** Computerprogramm, das auf einem Informationsträger gespeichert ist, das Programm umfassend Anweisungen, die es erlauben, das Verfahren zur Erschaffung nach einem der Ansprüche 1 bis 8 umzusetzen, wenn es geladen ist und von einem Computersystem ausgeführt wird.

**Claims**

**1.** Method for controlling home-automation devices in a dwelling, **characterised in that** the home-automation devices are controlled by a control device comprising a touch screen and which sends each command to a central unit that redirects the command to the home-automation device being controlled, the central unit being connected by radio link to the home-automation devices, the method comprising the steps of:

- determining (E50), by the central unit and by means of the radio link, of the list of home-automation devices,
- associating (E51), by means of the control device, of each home-automation device with an icon and with an alphanumeric identifier,
- obtaining (E52) by the control device of an image of at least part of the dwelling,
- displaying (E53) by the control device of the image on the touch screen,
- detecting (E54) by the control device of a selection of an icon from a list of icons,
- detecting (E55) by the control device of a positioning of the icon in the image and storage of the position of the icon determined,
- detecting (E56) by the control device of a pressing on the image at the position of the icon stored,
- generating (E57) by the control device of a command to the central unit and to the home-automation device with which the icon is associated or display of another icon linked to the icon, the position of which is stored if the pressing at the position of the icon in the image is detected.

2. Method according claim 1, **characterised in that** the method further comprises the steps of:

   - obtaining by the control device of a command to modify the visual appearance of the icon positioned in the image,
   - modifying by the control device of the visual appearance of the icon positioned in the image.

3. Method according to claim 2, **characterised in that** the modification of the positioning of the icon consists of making the icon translucent or reducing the size of the icon.

4. Method according to any of the preceding claims, **characterised in that** other images are obtained of the dwelling and **in that** the method comprises the steps of:

   - displaying, by the control device, of reduced images of other images obtained,
   - detecting by the control device of a selection of a reduced image of another image,
   - displaying of the other image corresponding to the reduced image selected,
   - detecting by the control device of a selection of an icon from a list of icons,
   - detecting by the control device of a positioning of the icon in the other image and storage of the position of the icon determined,
   - detecting by the control device of a pressing on the other image at the position of the stored icon,
   - generating by the control device of a command to the central unit and intended for the home-automation device with which the icon is associated or display of another icon linked to the icon the position of which is stored if the pressing at the position of the icon in the image is detected.

5. Method according to any of the preceding claims, **characterised in that** the home-automation devices are electrical appliances, sensors, lighting systems, blind or curtain devices, a heating system or an alarm unit.

6. Method according to claim 5, **characterised in that** the other icon linked to the icon the position of which is stored is a command with at least three possible states.

7. Method according to claim 5, **characterised in that** the other icon linked to the icon the position of which is stored consists of an invitation to enter a password.

8. Method according to any of the preceding claims, **characterised in that** the method further comprises a step of disconnecting steps of selecting an icon from a list of icons, of the obtaining by the control device of an image of at least part of the dwelling, of the detection by the control device of a selection of an icon from a list of icons and of the detection by the control device of a positioning of the icon in the image and storage of the position of the icon determined.

9. System for controlling home-automation devices in a dwelling, **characterised in that** the home-automation devices are controlled by a control device comprising a touch screen and which sends each command to a central unit that redirects the command to the home-automation device being controlled, the central unit being connected by radio link to the home-automation devices, the system comprising:

   - means, comprised in the central unit and by means of the radio link, for determining the list of home-automation devices,
   - means, comprised in the control device, for associating each home-automation device with an icon and with an alphanumeric identifier,
   - means, comprised in the control device, for obtaining an image of at least part of the dwelling,
   - means, comprised in the control device, for displaying the image on the touch screen,
   - means, comprised in the control device, for detecting a selection of an icon from a list of icons,
   - means, comprised in the control device, for detecting a positioning of the icon in the image and storing the position of the icon determined,
   - means, comprised in the control device, for detecting a pressing on the image at the position of the icon stored,
   - means, comprised in the control device, for generating a command at the central unit and intended for the home-automation device with which the icon is associated or displaying another icon related to the icon the position of which is stored if the pressing at the position of the icon in the image is detected.

10. Computer program stored on an information carrier, said program containing instructions for implementing the creation method according to any of claims 1 to 8 when it is loaded into and executed by a computer system.

Fig. 1

Fig. 2

Fig. 3

Fig. 4

E50 — Détermination liste

E51 — Association icône identifiant

E52 — Obtention image

E53 — Visualisation image

E54 — Sélection icône

E55 — Placement icône

E56 — Sélection icône

E57 — Action associée

E58 — Modification visibilité

Fig. 5

E60 — Récupération paramètres zone d'affichage

E61 — Affichage photo dimension initiale

E62 — Calcul des échelles pour zone affichage

E63 — Echelle largeur> échelle hauteur ?

E64 — Echelle hauteur

E65 — Echelle largeur

E66 — Mise à l'échelle image

E67 — Centrage

E68 — Affichage pictogramme

Fig. 6

Fig. 7

E80 — Activation application

E81 — Sélection image

E82 — Sélection icône

E83 — Commande deux états ?

E84 — Icône réglage

E85 — Commande

Fig. 8

90 —

91 —

20.5

Fig. 9

## RÉFÉRENCES CITÉES DANS LA DESCRIPTION

**Documents brevets cités dans la description**

• US 20140167931 A